(19) Europäisches Patentamt
European Patent Office
Office européen des brevets

(11) **EP 3 556 003 B1**

(12) **EUROPÄISCHE PATENTSCHRIFT**

(45) Veröffentlichungstag und Bekanntmachung des Hinweises auf die Patenterteilung:
**14.06.2023 Patentblatt 2023/24**

(21) Anmeldenummer: **17705343.6**

(22) Anmeldetag: **10.02.2017**

(51) Internationale Patentklassifikation (IPC):
**H02M 7/483** [(2007.01)]

(52) Gemeinsame Patentklassifikation (CPC):
**H02M 7/483; H02M 7/4835;** H02M 1/0025;
H02M 1/0054; Y02B 70/10

(86) Internationale Anmeldenummer:
**PCT/EP2017/053031**

(87) Internationale Veröffentlichungsnummer:
**WO 2018/145760 (16.08.2018 Gazette 2018/33)**

(54) **MULTILEVELUMRICHTER SOWIE VERFAHREN ZU DESSEN BETRIEB**

MULTI-LEVEL CONVERTER AND METHOD FOR OPERATING THE SAME

CONVERTISSEUR MULTI-NIVEAUX ET PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.10.2019 Patentblatt 2019/43**

(73) Patentinhaber: **Siemens Energy Global GmbH & Co. KG**
**81739 München (DE)**

(72) Erfinder:
• **FEHR, Hendrik**
**01159 Dresden (DE)**
• **GENSIOR, Albrecht**
**01277 Dresden (DE)**
• **KUBERA, Sascha**
**91325 Adelsdorf (DE)**
• **ALVAREZ VALENZUELA, Rodrigo Alonso**
**90408 Nürnberg (DE)**

(56) Entgegenhaltungen:
**WO-A1-2017/036712**

• **KUBERA SASCHA ET AL: "Control of switching frequency for modular multilevel converters by a variable hysteresis band modulation", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 5. September 2016 (2016-09-05), Seiten 1-7, XP032985414, DOI: 10.1109/EPE.2016.7695697 [gefunden am 2016-10-25] in der Anmeldung erwähnt**
• **JUN MEI ET AL: "Quasi-Fixed-Frequency Hysteresis Current Tracking Control Strategy for Modular Multilevel Converters", JOURNAL OF POWER ELECTRONICS, Bd. 14, Nr. 6, 20. November 2014 (2014-11-20), Seiten 1147-1156, XP055420473, ISSN: 1598-2092, DOI: 10.6113/JPE.2014.14.6.1147**
• **HASSANPOOR ARMAN ET AL: "Tolerance Band Modulation Methods for Modular Multilevel Converters", IEEE TRANSACTIONS ON POWER ELECTRONICS, INSTITUTE OF ELECTRICAL AND ELECTRONICS ENGINEERS, USA, Bd. 30, Nr. 1, 1. Januar 2015 (2015-01-01) , Seiten 311-326, XP011557529, ISSN: 0885-8993, DOI: 10.1109/TPEL.2014.2305114 [gefunden am 2014-08-26]**

**Beschreibung**

Die Erfindung bezieht sich auf ein Verfahren zum Betreiben eines modularen Multilevelumrichters, eine Steuereinrichtung für einen modularen Multilevelumrichter sowie einen modularen Multilevelumrichter als solchen.

Aus der Veröffentlichung "Control of Switching Frequency for Modular Multilevel Converters by a Variable Hysteresis Band Modulation" (Sascha Kubera, Rodrigo Alvarez, Jörg Dorn, 18th European Conference on Power Electronics and Applications EPE'16 ECCE Europe, 5.-9. September 2016, Karlsruhe, Germany) ist ein Verfahren zum Betreiben eines modularen Multilevelumrichters, der mindestens ein Konvertermodul mit elektrisch in Reihe geschalteten Submodulen aufweist, bekannt. Bei dem vorbekannten Verfahren wird die Spannung an dem mindestens einen Konvertermodul unter Bildung von Spannungsistwerten gemessen. Die Spannungsistwerte werden mit Spannungssollwerten verglichen und die Schalter der Submodule werden ein- oder ausgeschaltet, wenn ein in Abhängigkeit von den Differenzwerten zwischen den Spannungsistwerten und den Spannungssollwerten gebildeter Spannungsabweichungswert über ein durch ein vorgegebenes Hystereseband definiertes Maß abweichen. Das Hystereseband wird mit einer Kontrollgröße modifiziert. Die Kontrollgröße wird unter Heranziehung eines Messwertes, nämlich der jeweiligen Schaltfrequenz des Konvertermoduls, gebildet.

Weiterer Stand der Technik für die vorliegende Erfindung ist:
JUN MEI ET AL: "Quasi-Fixed-Frequency Hysteresis Current Tracking Control Strategy for Modular Multilevel Converters", JOURNAL OF POWER ELECTRONICS, Bd. 14, Nr. 6, 20. November 2014 (2014-11-20), Seiten 1147-1156 und WO 2017/036712 A1.

Der Erfindung liegt die Aufgabe zugrunde, ein noch weiter verbessertes Verfahren zum Betreiben eines modularen Multilevelumrichters anzugeben.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass die an den Submodulen anliegenden Submodulspannungen unter Bildung von Submodulspannungsmesswerten gemessen werden und die Kontrollgröße zumindest auch unter Heranziehung eines mit den Submodulspannungsmesswerten gebildeten Spannungshilfswertes gebildet wird.

Ein wesentlicher Vorteil des erfindungsgemäßen Verfahrens ist darin zu sehen, dass sich durch den Einbezug des Spannungshilfswertes die Schaltfrequenz zum Umschalten der Submodule in einfacher Weise reduzieren lässt und das resultierende Pulsmuster verbessert wird; beispielsweise lässt sich erreichen, dass der Mittelwert des Spannungsfehlerintegrals (Integral der Differenzwerte zwischen den Spannungsistwerten und den Spannungssollwerten über der Zeit) nahe bei Null liegt.

Als besonders vorteilhaft wird es angesehen, wenn während des Betriebs des Multilevelumrichters zumindest zeitweise ein oder mehrere Submodule des Konvertermoduls ausgeschaltet sind und - im Unterschied zu den eingeschalteten Submodulen - zu der Höhe der an dem Konvertermodul anliegenden Spannungsistwerten keinen Beitrag leisten und der Spannungshilfswert mit den Submodulspannungsmesswerten aller Submodule des Konvertermoduls ermittelt wird, unabhängig davon, ob diese eingeschaltet oder ausgeschaltet sind.

Der Spannungshilfswert wird unter Einbezug einer Addition der Submodulspannungsmesswerte aller Submodule des Konvertermoduls ermittelt, unabhängig davon, ob diese eingeschaltet oder ausgeschaltet sind.

Vorzugsweise wird der Spannungshilfswert durch Addition der Submodulspannungsmesswerte aller Submodule des Konvertermoduls, und zwar unabhängig davon, ob die jeweiligen Submodule eingeschaltet sind, und anschließender Quotientenbildung mit der Anzahl eingeschalteter Submodule und der Anzahl ausgeschalteter Submodule gebildet, insbesondere gemäß:

Uh = [∑ Usm(eingeschaltete Submodule) + ∑ Usm(ausgeschaltete Submodule)]/(Anzahl eingeschaltete Submodule + Anzahl ausgeschaltete Submodule), wobei Uh den Spannungshilfswert und Usm die Submodulspannungsmesswerte bezeichnet.

Die Kontrollgröße wird vorzugsweise unter Heranziehung einer ersten Hilfskontrollgröße gebildet

In einer besonderen Ausführungsform wird die Kontrollgröße unter Heranziehung sowohl der ersten als auch einer zweiten Hilfskontrollgröße gebildet.

In dieser besonderen Ausführungsform wird die Kontrollgröße durch Addition der ersten und zweiten Hilfskontrollgröße gebildet.

Zumindest eine der zwei Hilfskontrollgrößen wird bevorzugt unter Heranziehung des Spannungshilfswertes gebildet. Vorteilhaft ist es, wenn sowohl die erste als auch die zweite Hilfskontrollgröße vorzugsweise jeweils unter Heranziehung des Spannungshilfswertes gebildet werden.

Die erste Hilfskontrollgröße wird vorzugsweise in einem Mittelwertzweig gebildet, der die Kontrollgröße mit Blick darauf beeinflusst, dass der zeitliche Mittelwert des Spannungsabweichungswerts Null wird oder so nah wie möglich bei Null liegt.

Die zweite Hilfskontrollgröße wird vorzugsweise in einem Sägezahnzweig gebildet, der die Kontrollgröße mit Blick darauf beeinflusst, dass der zeitliche Verlauf der Differenzwerte zwischen den Spannungsistwerten und den Spannungssollwerten sägezahnförmig ist.

Als bevorzugt wird es angesehen, wenn durch Betragsbildung der mathematischen Ableitung der Differenzwerte zwischen den Spannungsistwerten und den Spannungssollwerten nach der Zeit eine Spannungsflankengröße gebildet wird und die erste und zweite Hilfskontrollgröße zumindest auch unter Heranziehung der Spannungsflankengröße gebildet werden.

Die erste Hilfskontrollgröße wird bevorzugt durch Quotientenbildung zwischen dem Quadrat des Spannungshilfswerts und einem Vielfachen, insbesondere dem 12-fachen, der Spannungsflankengröße gebildet.

Die zweite Hilfskontrollgröße wird vorzugsweise durch Multiplikation einer ersten Zwischengröße und einer zweiten Zwischengröße gebildet, wobei die erste Zwischengröße unter Heranziehung der Spannungsflankengröße und dem Spannungshilfswert ermittelt wird, und wobei die zweite Zwischengröße unter Heranziehung der Spannungsflankengröße, dem Spannungshilfswert und den Differenzwerten zwischen den Spannungsistwerten und den Spannungssollwerten ermittelt wird.

Die Erfindung bezieht sich darüber hinaus auf eine Steuereinrichtung zum Steuern eines modularen Multilevelumrichters, der mindestens ein Konvertermodul mit elektrisch in Reihe geschalteten Submodulen aufweist, wobei jedes Submodul jeweils mindestens zwei Schalter und einen Energiespeicher umfasst und wobei die Steuereinrichtung derart ausgebildet ist, dass sie das Verfahren nach Anspruch 1 ausführt.

Erfindungsgemäß weist die Steuereinrichtung die Merkmale des Patentanspruchs 12 auf. Dabei ist vorgesehen, dass die Steuereinrichtung die an den Submodulen anliegenden Submodulspannungen unter Bildung von Submodulspannungsmesswerten misst und die Kontrollgröße zumindest auch unter Heranziehung eines mit den Submodulspannungsmesswerten gebildeten Spannungshilfswertes gebildet wird.

Die Erfindung bezieht sich außerdem auf einen Multilevelumrichter. Erfindungsgemäß ist vorgesehen, dass dieser mit einer Steuereinrichtung wie oben beschrieben ausgestattet ist.

Die Erfindung wird nachfolgend anhand von Ausführungsbeispielen näher erläutert; dabei zeigen beispielhaft

Figur 1     ein Ausführungsbeispiel für einen erfindungsgemäßen Multilevelumrichter,

Figur 2     ein Ausführungsbeispiel für ein Submodul, das zur Bildung von Konvertermodulen bei dem Multilevelumrichter gemäß Figur 1 eingesetzt werden kann,

Figur 3     ein weiteres Ausführungsbeispiel für ein Submodul, das zur Bildung von Konvertermodulen bei dem Multilevelumrichter gemäß Figur 1 eingesetzt werden kann,

Figur 4     ein Ausführungsbeispiel für ein Verfahren zum Betreiben des Multilevelumrichters gemäß Figur 1 sowie in diesem Zusammenhang ein Ausführungsbeispiel für eine vorteilhafte Arbeitsweise einer Steuereinrichtung des Multilevelumrichters gemäß Figur 1, wobei bei dem Ausführungsbeispiel gemäß Figur 4 ein Sägezahnzweig und ein Mittelwertzweig betrieben werden,

Figur 5     Messwertverläufe während des Betriebs des Multilevelumrichters gemäß Figur 4 ohne Korrektur der Hysteresebandschwellen,

Figur 6     Messwertverläufe während des Betriebs des Multilevelumrichters gemäß Figur 4 mit Korrektur der Hysteresebandschwellen durch den Sägezahnzweig und den Mittelwertzweig,

Fig.7-8     die Messwertverläufe gemäß Figur 6 in einer vergrößerten Darstellung und

Figur 9     ein Ausführungsbeispiel für ein Verfahren zum Betreiben des Multilevelumrichters gemäß Figur 1 sowie in diesem Zusammenhang ein Ausführungsbeispiel für eine bevorzugte Arbeitsweise einer Steuereinrichtung des Multilevelumrichters gemäß Figur 1, wobei bei dem Ausführungsbeispiel gemäß Figur 9 nur ein Mittelwertzweig betrieben wird.

In den Figuren werden der Übersicht halber für identische oder vergleichbare Komponenten stets dieselben Bezugszeichen verwendet.

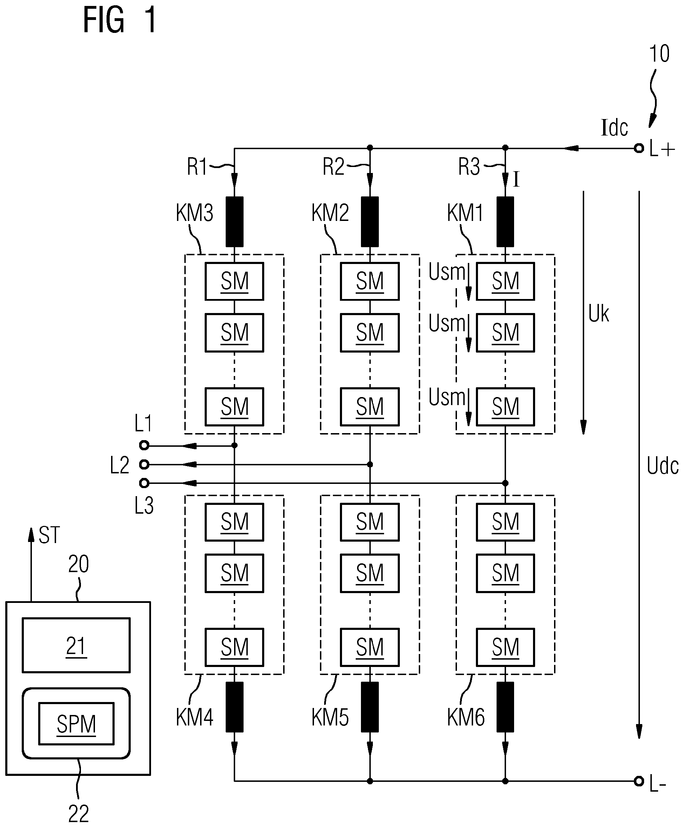

Die Figur 1 zeigt einen Multilevelumrichter 10, der drei Wechselspannungsanschlüsse L1, L2 und L3 aufweist, an denen jeweils ein Wechselstrom in den Multilevelumrichter 10 eingespeist oder aus diesem entnommen werden kann. Zwei Gleichspannungsanschlüsse, an denen ein Gleichstrom Idc in den Multilevelumrichter 10 eingespeist oder aus diesem entnommen werden kann, sind in der Figur 1 mit dem Bezugszeichen L+ und L- gekennzeichnet. Die Gleichspannung an den Gleichspannungsanschlüssen L+ und L- trägt das Bezugszeichen Udc.

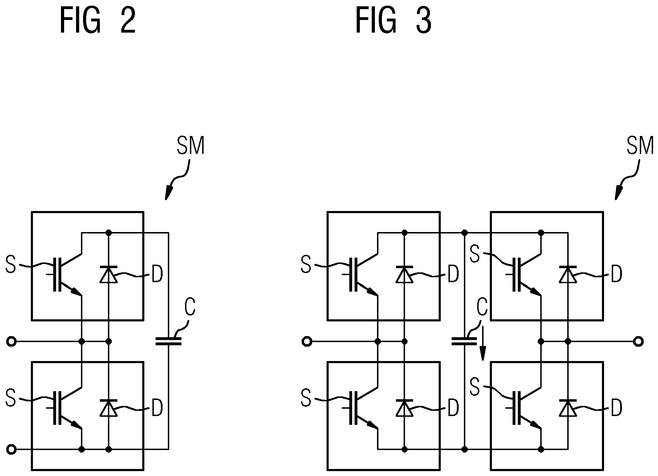

Der Multilevelumrichter 10 weist drei Reihenschaltungen R1, R2 und R3 auf, deren äußere Anschlüsse die Gleichspannungsanschlüsse L+ und L- des Multilevelumrichters 10 bilden. Die Reihenschaltungen R1, R2 und R3 umfassen jeweils zwei in Reihe geschaltete Konvertermodule (vgl. Bezugszeichen KM1-KM6). Jedes der Konvertermodule KM1-KM6 weist jeweils mindestens zwei in Reihe geschaltete Submodule SM auf, die jeweils mindestens zwei Schalter und einen Kondensator umfassen. Ausführungsbeispiele für geeignete Submodule SM werden nachfolgend beispielhaft im Zusammenhang mit den Figuren 2 und 3 erläutert.

Der Multilevelumrichter 10 weist eine Steuereinrichtung 20 auf, die zur Ansteuerung der Submodule SM und damit zur Ansteuerung der Konvertermodule KM1-KM6 geeignet ist. Die Steuereinrichtung 20 weist zu diesem Zweck eine Recheneinrichtung 21 sowie einen Speicher 22 auf. In dem Speicher 22 ist ein Steuerprogrammmodul SPM gespeichert, das die Arbeitsweise der Recheneinrichtung 21 bestimmt.

Die Figur 2 zeigt ein Ausführungsbeispiel für ein Submodul SM, das zwei Schalter S, zwei Dioden D sowie einen Kondensator C umfasst. Die genannten Komponenten bilden eine Halbbrückenschaltung, die durch Ansteuern der Schalter S - seitens der Steuereinrichtung 20 gemäß Figur 1 - einen unipolaren Betrieb des Kondensators C ermöglicht.

Die Figur 3 zeigt ein Ausführungsbeispiel für ein Submodul SM, das vier Schalter S, vier Dioden D sowie einen Kondensator C umfasst. Die genannten Komponenten bilden eine Vollbrückenschaltung, die durch Ansteuern der Schalter S - seitens der Steuereinrichtung 20 gemäß Figur 1 - einen bipolaren Betrieb des Kondensators C ermöglicht.

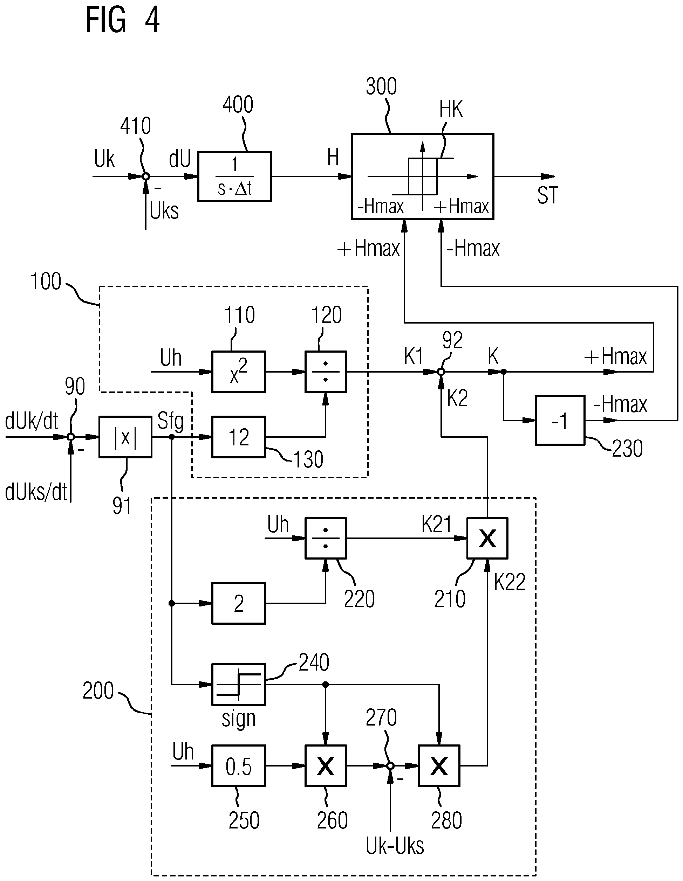

Die Figur 4 zeigt ein Ausführungsbeispiel für eine vorteilhafte Arbeitsweise der Steuereinrichtung 20 im Rahmen des Betriebs des Multilevelumrichters 10 gemäß Figur 1.

Die nachfolgenden Erläuterungen beziehen sich auf die Ansteuerung des Konvertermoduls KM1 gemäß Figur 1; die Ansteuerung der übrigen Konvertermodule KM2 bis KM6 erfolgt vorzugsweise in identischer oder zumindest vergleichbarer Form, so dass diesbezüglich auf die Ausführungen im Zusammenhang mit der Ansteuerung des Konvertermoduls KM1 verwiesen sei.

Die Steuereinrichtung 20 ermittelt zunächst eine Spannungsflankengröße Sfg, indem sie eine Betragsbildung der mathematischen Ableitung der Differenzwerte zwischen den Spannungsistwerten Uk, die die tatsächliche Spannung an dem Konvertermodul KM1 angeben, und den Spannungssollwerten Uks nach der Zeit durchführt, gemäß

$$Sfg = | \ dUk/dt \ - \ dUks/dt \ |$$

Bei dem Ausführungsbeispiel gemäß Figur 4 weist die Steuereinrichtung 20 zu diesem Zweck einen Differenzbildner 90 auf, der die zeitliche Ableitung der Spannungsistwerte Uk nach der Zeit und die entsprechende mathematische Ableitung der Spannungssollwerte Uks nach der Zeit einer Differenzbildung unterzieht. Die Differenzwerte des Differenzbildners 90 werden in einem Betragsbildner 91 der Betragsbildung unterzogen, wodurch ausgangsseitig die Spannungsflankengröße Sfg gebildet wird.

Alternativ ist es möglich, zunächst Differenzwerte zwischen den Spannungsistwerten Uk und den Spannungssollwerten Uks zu bilden und diese einer zeitlichen Ableitung nach der Zeit zu unterziehen, bevor die Betragsbildung im Betragsbildner 91 durchgeführt wird; das Ergebnis ist identisch:

$$Sfg = | \ d(Uk-Uks)/dt \ | \ = \ | \ dUk/dt \ - \ dUks/dt \ |$$

Die Spannungsflankengröße Sfg wird in einen Mittelwertzweig 100 eingespeist, und zwar gemeinsam mit einem Spannungshilfswert Uh.

Der Spannungshilfswert Uh stellt eine fiktive Spannungsgröße dar, die durch Addition der Submodulspannungsmesswerte Usm aller Submodule SM des Konvertermoduls KM1, und zwar unabhängig davon, ob die jeweiligen Submodule SM eingeschaltet sind, und anschließender Quotientenbildung mit der Anzahl eingeschalteter Submodule und der Anzahl ausgeschalteter Submodule gebildet wird. Der Spannungshilfswert Uh wird ermittelt gemäß:

$$Uh = [\Sigma \ Usm(\text{eingeschaltete Submodule}) + \Sigma \ Usm(\text{ausgeschaltete Submodule})]/(\text{Anzahl eingeschaltete Submodule} + \text{Anzahl ausgeschaltete Submodule})$$

Der Spannungshilfswert Uh gibt also in der Regel nicht die tatsächliche Spannung am Konvertermodul KM1 an, weil üblicherweise nicht alle Submodule SM des Konvertermoduls KM1 gleichzeitig eingeschaltet sind.

Der jeweilige Spannungsistwert Uk wird im Gegensatz dazu anders ermittelt, nämlich indem die Spannung an dem Konvertermodul KM1 unmittelbar gemessen wird oder indem eine Summenbildung der Submodulspannungen Usm aller eingeschalteten Submodule SM durchgeführt wird, gemäß

$$Uk = \Sigma\ Usm(eingeschaltete\ Submodule)$$

Im Mittelwertzweig 100 wird der Spannungshilfswert Uh mittels eines Quadrierers 110 quadriert und nachfolgend in einem Quotientenbildner 120 eingespeist, der eine Quotientenbildung zwischen dem Quadrat des Spannungshilfswerts Uh und dem Zwölffachen der Spannungsflankengröße Sfg bildet. Die Multiplikation mit dem Faktor 12 wird in einem Multiplizierer 130 des Mittelwertzweigs 100 durchgeführt. Das Ergebnis des Mittelwertzweigs 100 bzw. des Quotientenbildners 120 bildet eine erste Hilfskontrollgröße K1, die in einen Summenbildner 92 eingespeist wird.

In einem Sägezahnzweig 200 bildet die Steuereinrichtung 20 gemäß Figur 1 eine zweite Hilfskontrollgröße K2, wobei sie die Spannungsflankengröße Sfg, den Spannungshilfswert Uh sowie Differenzwerte zwischen dem jeweiligen Spannungsistwert Uk und dem Spannungssollwert Uks berücksichtigt.

Bei dem Ausführungsbeispiel gemäß Figur 4 wird die zweite Hilfskontrollgröße K2 durch Multiplikation einer ersten Zwischengröße K21 und einer zweiten Zwischengröße K22 gebildet; die Multiplikation wird in einem Multiplizierer 210 durchgeführt.

Die erste Zwischengröße K21 bildet die Steuereinrichtung 20 unter Heranziehung der Spannungsflankengröße Sfg und dem Spannungshilfswert Uh, indem sie den Spannungshilfswert Uh und das Zweifache der Spannungsflankengröße Sfg in einem Quotientenbildner 220 einer Quotientenbildung unterzieht.

Die zweite Zwischengröße K22 bildet die Steuereinrichtung 20 unter Heranziehung der Spannungsflankengröße Sfg, dem Spannungshilfswert Uh und dem Differenzwert zwischen dem Spannungsistwert Uk und dem Spannungssollwert Uks mittels eines Vorzeichenbildners 240, einem Multiplizierer 250, einem weiteren Multiplizierer 260, einem Differenzbildner 270 sowie einem zusätzlichen Multiplizierer 280, wie dies in den entsprechenden Funktionsblöcken in Figur 4 dargestellt ist.

Die erste Hilfskontrollgröße K1 des Mittelwertzweigs 100 und die zweite Hilfskontrollgröße K2 des Sägezahnzweigs 200 werden in dem Summenbildner 92 einer Summenbildung unterzogen, wodurch eine Kontrollgröße K gebildet wird.

Mit der Kontrollgröße K werden eine obere Hysteresebandschwelle +Hmax sowie eine untere Hysteresebandschwelle -Hmax gebildet. Die Kontrollgröße K definiert unmittelbar die obere Hysteresebandschwelle; in diesem Fall wird die untere Hysteresebandschwelle -Hmax vorzugsweise mittels eines Inverters 230 gebildet, der das Vorzeichen der Kontrollgröße K invertiert.

Die obere Hysteresebandschwelle +Hmax und die untere Hysteresebandschwelle -Hmax werden in ein Umschaltmodul 300 eingespeist, das ausgangsseitig Steuersignale ST zum Umschalten der Submodule SM des Konvertermoduls KM1 gemäß Figur 1 erzeugt. Zu diesem Zweck vergleicht das Umschaltmodul 300 einen Spannungsabweichungswert H mit einer in dem Umschaltmodul 300 definierten Hysteresekurve HK und erzeugt die Steuersignale ST zum Umschalten der Submodule, wenn der Spannungsabweichungswert H ein durch die Hysteresekurve HK definiertes Hystereseband, das durch die obere Hysteresebandschwelle +Hmax und die untere Hysteresebandschwelle -Hmax begrenzt ist, verlässt. Liegt der Spannungsabweichungswert H innerhalb des durch die Hysteresekurve HK definierten Hysteresebands, so ist ein Umschalten der Submodule SM nicht nötig.

Das Umschaltmodul 300 kann die Steuersignale ST, die ein Umschalten der Schalter der Submodule SM hervorrufen, erzeugen, wie dies beispielsweise aus der oben genannten Veröffentlichung "Control of Switching Frequency for Modular Multilevel Converters by a Variable Hysteresis Band Modulation" bereits bekannt ist.

Bei dem Ausführungsbeispiel gemäß Figur 4 wird der Spannungsabweichungswert H durch Integration mittels eines Integrators 400 gebildet, der einen Spannungsdifferenzwert dU einer Integration mit einer Zeitkonstanten Δt unterzieht. Der Spannungsdifferenzwert dU wird durch Differenzbildung zwischen dem jeweiligen Spannungsistwert Uk der Spannung am Konvertermodul KM1 gemäß Figur 1 und dem jeweils vorgegebenen Spannungssollwert Uks gebildet; die Differenzbildung zur Bildung des Spannungsdifferenzwerts dU kann durch einen Differenzbildner 410 erfolgen.

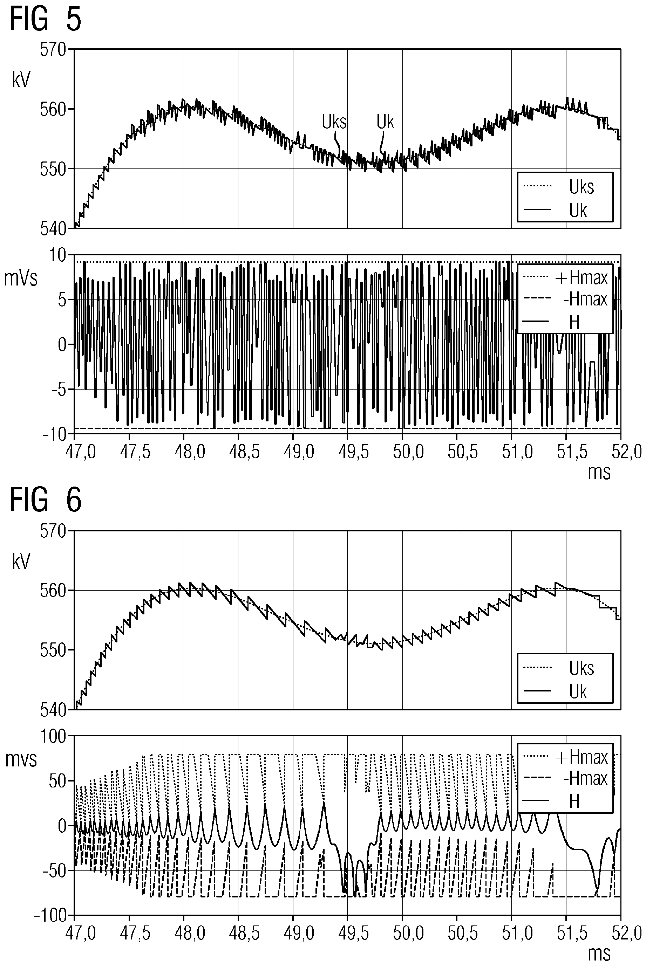

Die Figur 5 und die Figur 6 zeigen anhand von simulierten Messwerten den positiven Einfluss des Mittelwertzweigs 100 sowie des Sägezahnzweigs 200 auf das Schaltverhalten des Multilevelumrichters 10 gemäß Figur 1. Dabei zeigt die Figur 5 den Verlauf der Spannungsistwerte Uk und der Spannungssollwerte Uks sowie die Schaltvorgänge zum Umschalten der Submodule über der Zeit t für den Fall, dass eine Nachregelung der Hysteresebandschwellen mittels der Kontrollgröße K unterbleibt. Die Figur 6 zeigt zum Vergleich den positiven Einfluss einer Nachregelung der Hysteresebandschwellen durch den Mittelwertzweig 100 und den Sägezahnzweig 200.

Es lässt sich in der Figur 6 erkennen, dass der Mittelwertzweig 100 dazu führt, dass die Hysteresekurve HK derart eingestellt wird, dass der zeitliche Mittelwert des Spannungsabweichungswerts H Null, zumindest näherungsweise gleich Null, wird.

Darüber hinaus lässt sich in der Figur 6 erkennen, dass durch den Einfluss des Sägezahnzweigs 200 eine Regelung der Schaltzeitpunkte zum Umschalten der Submodule SM derart erfolgt, dass die Differenz zwischen den Spannungsistwerten Uk und den Spannungssollwerten Uks einem Sägezahnsignal entspricht bzw. einem solchen hochgradig ähnlich ist.

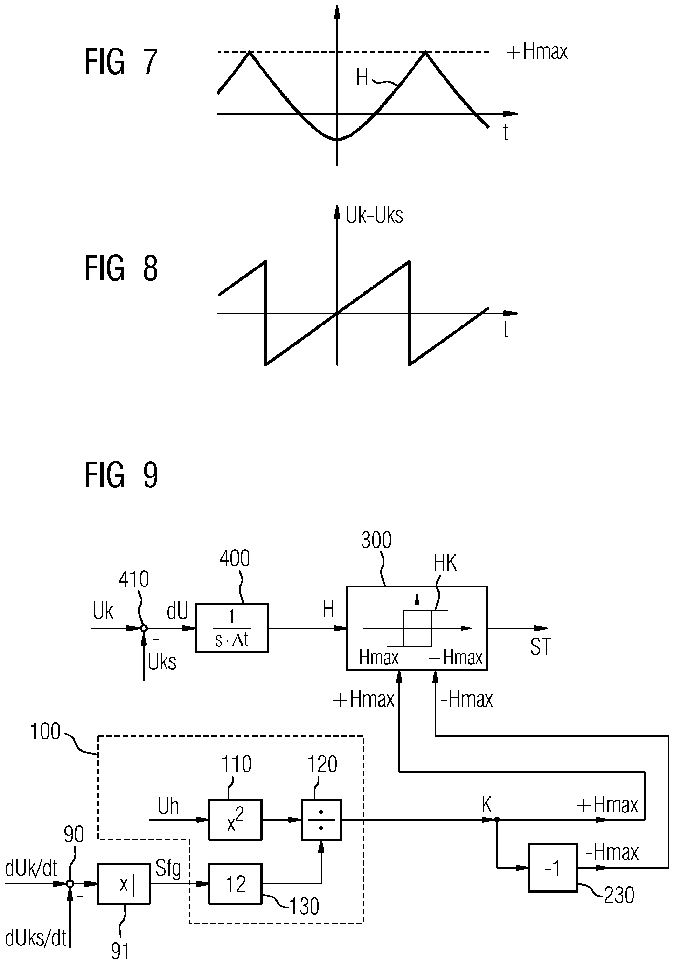

In den Figuren 7 und 8 sind der Spannungsabweichungswert H und der Sägezahnverlauf der Differenzwerte zwischen den Spannungsistwerten Uk und den Spannungssollwerten Uks jeweils über der Zeit t nochmals in einer vergrößerten Darstellung gezeigt.

Die Figur 9 zeigt das bevorzugte Ausführungsbeispiel für einen bevorzugten Aufbau bzw. eine bevorzugte Arbeitsweise der Steuereinrichtung 20 im Rahmen des Betriebs des Multilevelumrichters 10 gemäß Figur 1. Im Zusammenhang mit der Figur 9 wird wiederum auf das Konvertermodul KM1 gemäß Figur 1 Bezug genommen.

Bei dem Ausführungsbeispiel gemäß Figur 9 wertet die Steuereinrichtung 20 ausschließlich den Spannungshilfswert Uh sowie die Spannungsflankengröße Sfg im Mittelwertzweig 100 aus und bildet allein mit dem Mittelwertzweig 100 die Kontrollgröße K, mit der eine Einstellung der Hysteresebandschwellen +Hmax bzw. -Hmax erfolgt. Im Übrigen gelten die obigen Ausführungen im Zusammenhang mit den Figuren 4 bis 8 bei dem Ausführungsbeispiel gemäß Figur 9 entsprechend.

Der Mittelwertzweig 100 führt bei dem Ausführungsbeispiel gemäß Figur 9 dazu, dass der Spannungsabweichungswert H im zeitlichen Mittelwert gleich oder zumindest näherungsweise gleich Null wird, wie dies beispielhaft im Zusammenhang mit der Figur 6 und Figur 7 oben bereits erläutert wurde.

Die Steuereinrichtung 20 kann, wie in der Figur 1 gezeigt, eine Recheneinrichtung 21 und einen Speicher 22 umfassen, in dem die in den Figuren 4 und 9 gezeigten Funktionsmodule als Softwaremodule, beispielsweise innerhalb des Steuerprogrammmoduls SPM gespeichert sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 10 | Multilevelumrichter |
| 20 | Steuereinrichtung |
| 21 | Recheneinrichtung |
| 22 | Speicher |
| 90 | Differenzbildner |
| 91 | Betragsbildner |
| 92 | Summenbildner |
| 100 | Mittelwertzweig |
| 110 | Quadrierer |
| 120 | Quotientenbildner |
| 130 | Multiplizierer |
| 200 | Sägezahnzweig |
| 210 | Multiplizierer |
| 220 | Quotientenbildner |
| 230 | Inverter |
| 240 | Vorzeichenbildner |
| 250 | Multiplizierer |
| 260 | Multiplizierer |
| 270 | Differenzbildner |
| 280 | Multiplizierer |
| 300 | Umschaltmodul |
| 400 | Integrator |
| 410 | Differenzbildner |

| | |
|---|---|
| C | Kondensator |
| D | Diode |
| dU | Spannungsdifferenzwert |
| H | Spannungsabweichungswert |
| +Hmax | Hysteresebandschwelle |
| -Hmax | Hysteresebandschwelle |
| HK | Hysteresekurve |

| Idc | Gleichstrom |
|---|---|
| K | Kontrollgröße |
| K1,K2 | Hilfskontrollgröße |
| K21,K22 | Zwischengröße |
| KM1-KM6 | Konvertermodul |
| L1 | Wechselspannungsanschluss |
| L2 | Wechselspannungsanschluss |
| L3 | Wechselspannungsanschluss |
| L+ | Gleichspannungsanschluss |
| L- | Gleichspannungsanschluss |
| R1 | Reihenschaltung |
| R2 | Reihenschaltung |
| R3 | Reihenschaltung |
| S | Schalter |
| Sfg | Spannungsflankengröße |
| SPM | Steuerprogrammmodul |
| SM | Submodule |
| ST | Steuersignal |
| t | Zeit |
| Udc | Gleichspannung |
| Uh | Spannungshilfswert |
| Uk | Spannungsistwert |
| Uks | Spannungssollwert |
| Usm | Submodulspannungsmesswert |
| $\Delta$t | Zeitkonstante |

**Patentansprüche**

1. Verfahren zum Betreiben eines modularen Multilevelumrichters (10), der mindestens ein Konvertermodul (KM1-KM6) mit elektrisch in Reihe geschalteten Submodulen (SM) aufweist, wobei jedes Submodul (SM) jeweils mindestens zwei Schalter (S) und einen Energiespeicher umfasst, wobei bei dem Verfahren

   - die Spannung an dem mindestens einen Konvertermodul (KM1-KM6) unter Bildung von Spannungsistwerten (Uk) ermittelt wird,
   - die Spannungsistwerte (Uk) mit Spannungssollwerten (Uks) verglichen werden und
   - zumindest einer der Schalter (S) der Submodule (SM) umgeschaltet wird, wenn ein in Abhängigkeit von den Differenzwerten zwischen den Spannungsistwerten (Uk) und den Spannungssollwerten (Uks) gebildeter Spannungsabweichungswert (H) über ein durch ein vorgegebenes Hystereseband, das durch eine obere Hysteresebandschwelle (+Hmax) und eine untere Hysteresebandschwelle (-Hmax) festgelegt ist, definiertes Maß abweicht,
   - wobei die obere Hysteresebandschwelle (+Hmax), die untere Hysteresebandschwelle (-Hmax) oder beide Hysteresebandschwellen zur Erzielung eines vorgegebenen Umrichterverhaltens regelmäßig oder unregelmäßig mit einer Kontrollgröße (K) modifiziert werden,
   - wobei die Kontrollgröße (K) unmittelbar die obere Hysteresebandschwelle (+Hmax) definiert und die untere Hysteresebandschwelle (-Hmax) der Kontrollgröße (K) mit invertiertem Vorzeichen entspricht,
   **dadurch gekennzeichnet, dass**
   - die an den Submodulen (SM) anliegenden Submodulspannungen unter Bildung von Submodulspannungsmesswerten (Usm) gemessen werden,
   - ein Spannungshilfswert (Uh) unter Einbezug einer Addition der Submodulspannungsmesswerte (Usm) aller Submodule (SM) des Konvertermoduls (KM1-KM6) ermittelt wird, unabhängig davon, ob diese eingeschaltet oder ausgeschaltet sind,
   - durch Betragsbildung der mathematischen Ableitung der Differenzwerte zwischen den Spannungsistwerten (Uk) und den Spannungssollwerten (Uks) nach der Zeit eine Spannungsflankengröße (Sfg) gebildet wird und
   - die Kontrollgröße (K) durch Quotientenbildung zwischen dem Quadrat des Spannungshilfswerts (Uh) und einem Vielfachen, insbesondere dem 12-fachen, der Spannungsflankengröße (Sfg) gebildet wird,
   - wodurch die Schaltfrequenz zum Umschalten der Submodule reduzierbar ist.

2. Verfahren nach Anspruch 1,
**dadurch gekennzeichnet, dass**
während des Betriebs des Multilevelumrichters (10) zumindest zeitweise ein oder mehrere Submodule (SM) des Konvertermoduls (KM1-KM6) ausgeschaltet sind und - im Unterschied zu den eingeschalteten Submodulen (SM) - zu der Höhe der an dem Konvertermodul (KM1-KM6) anliegenden Spannungsistwerten (Uk) keinen Beitrag leisten.

3. Verfahren nach einem der voranstehenden Ansprüche,
**dadurch gekennzeichnet, dass**
die Kontrollgröße (K) unter Heranziehung einer ersten und einer zweiten Hilfskontrollgröße (K1, K2) gebildet wird.

4. Verfahren nach Anspruch 3,
**dadurch gekennzeichnet, dass**
die Kontrollgröße (K) durch Addition der ersten und zweiten Hilfskontrollgröße (K1, K2) gebildet wird.

5. Verfahren nach einem der voranstehenden Ansprüche 3 bis 4,
**dadurch gekennzeichnet, dass**
zumindest eine der zwei Hilfskontrollgrößen (K1, K2) unter Heranziehung des Spannungshilfswertes (Uh) gebildet wird.

6. Verfahren nach einem der voranstehenden Ansprüche 3 bis 5,
**dadurch gekennzeichnet, dass**
die erste und zweite Hilfskontrollgröße (K1, K2) jeweils unter Heranziehung des Spannungshilfswertes (Uh) gebildet werden.

7. Verfahren nach einem der voranstehenden Ansprüche,
**dadurch gekennzeichnet, dass**
die erste Hilfskontrollgröße (K1) in einem Mittelwertzweig (100) gebildet wird, der die Kontrollgröße (K) mit Blick darauf beeinflusst, dass der zeitliche Mittelwert des Spannungsabweichungswerts (H) Null wird oder so nah wie möglich bei Null liegt.

8. Verfahren nach einem der voranstehenden Ansprüche,
**dadurch gekennzeichnet, dass**
die zweite Hilfskontrollgröße (K2) in einem Sägezahnzweig (200) gebildet wird, der die Kontrollgröße (K) mit Blick darauf beeinflusst, dass der zeitliche Verlauf der Differenzwerte zwischen den Spannungsistwerten (Uk) und den Spannungssollwerten (Uks) sägezahnförmig ist.

9. Verfahren nach einem der voranstehenden Ansprüche,
**dadurch gekennzeichnet, dass**
die erste und zweite Hilfskontrollgröße (K1, K2) zumindest auch unter Heranziehung der Spannungsflankengröße (Sfg) gebildet werden.

10. Verfahren nach Anspruch 9,
**dadurch gekennzeichnet, dass**
die erste Hilfskontrollgröße (K1) durch Quotientenbildung zwischen dem Quadrat des Spannungshilfswerts (Uh) und einem Vielfachen, insbesondere dem 12-fachen, der Spannungsflankengröße (Sfg) gebildet wird.

11. Verfahren nach einem der voranstehenden Ansprüche 9 bis 10,
**dadurch gekennzeichnet, dass**
die zweite Kontrollgröße (K2) durch Multiplikation einer ersten Zwischengröße (K21) und einer zweiten Zwischengröße (K22) gebildet wird,

- wobei die erste Zwischengröße (K21) unter Heranziehung der Spannungsflankengröße (Sfg) und dem Spannungshilfswert (Uh) ermittelt wird, und
- wobei die zweite Zwischengröße (K22) unter Heranziehung der Spannungsflankengröße (Sfg), dem Spannungshilfswert (Uh) und den Differenzwerten zwischen den Spannungsistwerten (Uk) und den Spannungssollwerten (Uks) ermittelt wird.

12. Steuereinrichtung zum Steuern eines modularen Multilevelumrichters (10), der mindestens ein Konvertermodul (KM1-KM6) mit elektrisch in Reihe geschalteten Submodulen (SM) aufweist,

wobei jedes Submodul (SM) jeweils mindestens zwei Schalter (S) und einen Energiespeicher umfasst und wobei die Steuereinrichtung derart ausgebildet ist, dass sie

- die Spannung an dem mindestens einen Konvertermodul (KM1-KM6) unter Bildung von Spannungsistwerten (Uk) ermittelt,
- die Spannungsistwerte (Uk) mit Spannungssollwerten (Uks) vergleicht und
- zumindest einen der Schalter (S) der Submodule (SM) umschaltet, wenn die Spannungsistwerte (Uk) von den Spannungssollwerten (Uks) über ein durch ein vorgegebenes Hystereseband, das durch eine obere Hysteresebandschwelle (+Hmax) und eine untere Hysteresebandschwelle (-Hmax) festgelegt ist, definiertes Maß abweichen,
- wobei die obere Hysteresebandschwelle (+Hmax), die untere Hysteresebandschwelle (-Hmax) oder beide Hysteresebandschwellen zur Erzielung eines vorgegebenen Umrichterverhaltens regelmäßig oder unregelmäßig mit einer Kontrollgröße (K) modifiziert werden,
- wobei die Kontrollgröße (K) unmittelbar die obere Hysteresebandschwelle (+Hmax) definiert und die untere Hysteresebandschwelle (-Hmax) der Kontrollgröße (K) mit invertiertem Vorzeichen entspricht,

**dadurch gekennzeichnet, dass**

- die Steuereinrichtung derart ausgebildet ist, dass sie die an den Submodulen (SM) anliegenden Submodulspannungen unter Bildung von Submodulspannungsmesswerten (Usm) misst,
- einen Spannungshilfswert (Uh) unter Einbezug einer Addition der Submodulspannungsmesswerte (Usm) aller Submodule (SM) des Konvertermoduls (KM1-KM6) ermittelt, unabhängig davon, ob diese eingeschaltet oder ausgeschaltet sind,
- durch Betragsbildung der mathematischen Ableitung der Differenzwerte zwischen den Spannungsistwerten (Uk) und den Spannungssollwerten (Uks) nach der Zeit eine Spannungsflankengröße (Sfg) bildet und
- die Kontrollgröße (K) durch Quotientenbildung zwischen dem Quadrat des Spannungshilfswerts (Uh) und einem Vielfachen, insbesondere dem 12-fachen, der Spannungsflankengröße (Sfg) bildet,
- wodurch die Schaltfrequenz zum Umschalten der Submodule reduzierbar ist.

**13.** Multilevelumrichter (10),
**dadurch gekennzeichnet, dass**
dieser mit einer Steuereinrichtung nach Anspruch 12 ausgestattet ist.

**Claims**

**1.** Method for operating a modular multilevel converter (10) that has at least one converter module (KM1-KM6) comprising electrically series-connected submodules (SM), wherein each submodule (SM) comprises in each case at least two switches (S) and an energy store, wherein, in the method,

- the voltage on the at least one converter module (KM1-KM6) is ascertained so as to form voltage actual values (Uk),
- the voltage actual values (Uk) are compared with voltage setpoint values (Uks) and
- at least one of the switches (S) of the submodules (SM) is switched over when a voltage deviation value (H), formed on the basis of the differential values between the voltage actual values (Uk) and the voltage setpoint values (Uks), deviates above a measure defined by a predefined hysteresis band, which is given by an upper hysteresis band threshold (+Hmax) and a lower hysteresis band threshold (-Hmax),
- wherein the upper hysteresis band threshold (+Hmax), the lower hysteresis band threshold (-Hmax) or both hysteresis band thresholds are modified regularly or irregularly with a control variable (K) so as to achieve a predefined converter behaviour,
- wherein the control variable (K) directly defines the upper hysteresis band threshold (+Hmax) and the lower hysteresis band threshold (-Hmax) corresponds to the control variable (K) with an inverted mathematical sign,

**characterized in that**

- the submodule voltages present on the submodules (SM) are measured so as to form submodule voltage measured values (Usm),

- a voltage auxiliary value (Uh) is ascertained by incorporating an addition of the submodule voltage measured values (Usm) of all submodules (SM) of the converter module (KM1-KM6), independently of whether these are activated or deactivated,

- a voltage edge variable (Sfg) is formed by calculating an absolute value of the mathematical derivative of the differential values between the voltage actual values (Uk) and the voltage setpoint values (Uks) over time, and

- the control variable (K) is formed by calculating a quotient between the square of the voltage auxiliary value (Uh) and a multiple of, in particular 12 times, the voltage edge variable (Sfg),

- as a result of which the switching frequency for switching over the submodules is able to be reduced.

2. Method according to Claim 1,
**characterized in that**,
during operation of the multilevel converter (10), one or more submodules (SM) of the converter module (KM1-KM6) are at least temporarily deactivated and - in contrast to the activated submodules (SM) - do not contribute to the magnitude of the voltage actual values (Uk) present on the converter module (KM1-KM6).

3. Method according to either of the preceding claims,
**characterized in that**
the control variable (K) is formed by applying a first and a second auxiliary control variable (K1, K2).

4. Method according to Claim 3,
**characterized in that**
the control variable (K) is formed by adding the first and second auxiliary control variable (K1, K2).

5. Method according to either of preceding Claims 3 and 4,
**characterized in that**
at least one of the two auxiliary control variables (K1, K2) is formed by applying the voltage auxiliary value (Uh).

6. Method according to one of preceding Claims 3 to 5,
**characterized in that**
the first and second auxiliary control variable (K1, K2) are each formed by applying the voltage auxiliary value (Uh).

7. Method according to one of the preceding claims,
**characterized in that**
the first auxiliary control variable (K1) is formed in an average branch (100) that influences the control variable (K) with a view to the temporal average of the voltage deviation value (H) becoming zero or being as close as possible to zero.

8. Method according to one of the preceding claims,
**characterized in that**
the second auxiliary control variable (K2) is formed in a sawtooth branch (200) that influences the control variable (K) with a view to the temporal characteristic of the differential values between the voltage actual values (Uk) and the voltage setpoint values (Uks) being sawtooth-shaped.

9. Method according to one of the preceding claims,
**characterized in that**
the first and second auxiliary control variable (K1, K2) are formed at least also by incorporating the voltage edge variable (Sfg).

10. Method according to Claim 9,
**characterized in that**
the first auxiliary control variable (K1) is formed by calculating a quotient between the square of the voltage auxiliary value (Uh) and a multiple of, in particular 12 times, the voltage edge variable (Sfg).

11. Method according to either of preceding Claims 9 and 10,
**characterized in that**
the second control variable (K2) is formed by multiplying a first intermediate variable (K21) and a second intermediate variable (K22),

- wherein the first intermediate variable (K21) is ascertained by applying the voltage edge variable (Sfg) and the voltage auxiliary value (Uh), and
- wherein the second intermediate variable (K22) is ascertained by applying the voltage edge variable (Sfg), the voltage auxiliary value (Uh) and the differential values between the voltage actual values (Uk) and the voltage setpoint values (Uks).

**12.** Control device for controlling a modular multilevel converter (10) that has at least one converter module (KM1-KM6) comprising electrically series-connected submodules (SM), wherein each submodule (SM) comprises in each case at least two switches (S) and an energy store, and wherein the control device is designed such that it

- ascertains the voltage on the at least one converter module (KM1-KM6) so as to form voltage actual values (Uk),
- compares the voltage actual values (Uk) with voltage setpoint values (Uks) and
- switches over at least one of the switches (S) of the submodules (SM) when the voltage actual values (Uk) deviate from the voltage setpoint values (Uks) above a measure defined by a predefined hysteresis band, which is given by an upper hysteresis band threshold (+Hmax) and a lower hysteresis band threshold (-Hmax),
- wherein the upper hysteresis band threshold (+Hmax), the lower hysteresis band threshold (-Hmax) or both hysteresis band thresholds are modified regularly or irregularly with a control variable (K) so as to achieve a predefined converter behaviour,
- wherein the control variable (K) directly defines the upper hysteresis band threshold (+Hmax) and the lower hysteresis band threshold (-Hmax) corresponds to the control variable (K) with an inverted mathematical sign,

**characterized in that**

- the control device is designed such that it measures the submodule voltages present on the submodules (SM) so as to form submodule voltage measured values (Usm),
- ascertains a voltage auxiliary value (Uh) by incorporating an addition of the submodule voltage measured values (Usm) of all submodules (SM) of the converter module (KM1-KM6), independently of whether these are activated or deactivated,
- forms a voltage edge variable (Sfg) by calculating an absolute value of the mathematical derivative of the differential values between the voltage actual values (Uk) and the voltage setpoint values (Uks) over time, and
- forms the control variable (K) by calculating a quotient between the square of the voltage auxiliary value (Uh) and a multiple of, in particular 12 times, the voltage edge variable (Sfg),
- as a result of which the switching frequency for switching over the submodules is able to be reduced.

**13.** Multilevel converter (10),
**characterized in that**
it is equipped with a control device according to Claim 12.

**Revendications**

**1.** Procédé pour faire fonctionner un onduleur (10) modulaire à plusieurs niveaux, qui comporte au moins un module (KM1-KM6) de convertisseur ayant des sous-modules (SM) montés électriquement en série, dans lequel chaque sous-module (SM) comprend respectivement au moins deux interrupteurs (S) et un accumulateur d'énergie, dans lequel dans le procédé :

- on détermine la tension aux bornes du au moins un module (KM1-KM6) de convertisseur avec formation de valeurs (Uk) réelles de tension,
- on compare les valeurs (Uk) réelles de tension à des valeurs (Uks) de consigne de tension, et
- on commute au moins l'un des interrupteurs (S) des sous-modules (SM), si une valeur (H) d'écart de tension, formée en fonction des valeurs de différence entre les valeurs (Uk) réelles de tension et les valeurs (Uks) de consigne de tension, s'écarte, dans une mesure définie, au-delà d'une bande d'hystérésis donnée à l'avance, qui est fixée par un seuil (+Hmax) supérieur de bande d'hystérésis et par un seuil (-Hmax) inférieur de bande d'hystérésis,
- dans lequel on modifie, régulièrement ou irrégulièrement, par une grandeur (K) de contrôle, le seuil (+Hmax) supérieur de bande d'hystérésis, le seuil (-Hmax) inférieur de bande d'hystérésis ou les deux seuils de bande d'hystérésis, pour obtenir un comportement de l'onduleur donné à l'avance,

- dans lequel la grandeur (K) de contrôle définit directement le seuil (+Hmax) supérieur de bande d'hystérésis et le seuil (-Hmax) inférieur de bande d'hystérésis correspond à la grandeur (K) de contrôle avec inversion du signe,

**caractérisé en ce que**

- on mesure les tensions de sous-modules s'appliquant aux sous-modules (SM) avec formation de valeurs (Usm) de mesure de tension de sous-module,
- on détermine une valeur (Uh) auxiliaire de tension avec incorporation d'une addition des valeurs (Usm) de mesure de tension de sous-module de tous les sous-modules (SM) du module (KM1-KM6) de convertisseur, indépendamment du point de savoir si ceux-ci sont en circuit ou hors circuit,
- par la formation de la valeur absolue de la dérivée mathématique des valeurs de différence entre les valeurs (Uk) réelles de tension et les valeurs (Uks) de consigne de tension en fonction du temps, on forme une grandeur (Sfg) de flanc de tension, et
- on forme la grandeur (K) de contrôle par formation du quotient du carré de la valeur (Uh) auxiliaire de tension par un multiple, notamment de 12 fois, de la grandeur (Sfg) de flanc de tension,
- grâce à quoi la fréquence de commutation pour la commutation des sous-modules peut être réduite.

2. Procédé suivant la revendication 1,
   **caractérisé en ce que**
   pendant le fonctionnement de l'onduleur (10) à plusieurs niveaux, on met hors circuit, au moins de temps en temps, un ou plusieurs sous-modules (SM) du module (KM1-KM6) de convertisseur et - à la différence des sous-modules (SM) mis en circuit - des valeurs (Uk) réelles de tension s'appliquant au niveau du module (KM1-KM6) de convertisseur ne fournissent pas de contribution.

3. Procédé suivant l'une des revendications précédentes,
   **caractérisé en ce que**
   l'on forme la grandeur (K) de contrôle en tirant parti d'une première et d'une deuxième grandeur (K1, K2) auxiliaire de contrôle.

4. Procédé suivant la revendication 3,
   **caractérisé en ce que**
   l'on forme la grandeur (K) de contrôle par addition de la première et de la deuxième grandeur (K1, K2) auxiliaire de contrôle.

5. Procédé suivant l'une des revendications 3 à 4,
   **caractérisé en ce que**
   l'on forme au moins l'une des deux grandeurs (K1, K2) auxiliaires de contrôle en tirant parti de la valeur (Uh) auxiliaire de tension.

6. Procédé suivant l'une des revendications 3 à 5 précédentes,
   **caractérisé en ce que**
   l'on forme la première et la deuxième grandeur (K1, K2) auxiliaires de contrôle respectivement en tirant parti de la valeur (Uh) auxiliaire de tension.

7. Procédé suivant l'une des revendications précédentes,
   **caractérisé en ce que**
   l'on forme la première grandeur (K1) auxiliaire de contrôle dans une branche (100) de valeur moyenne, qui influe sur la grandeur (K) de contrôle, en ce sens que la valeur moyenne dans le temps de la valeur (H) d'écart de tension s'annule ou devient aussi proche que possible de zéro.

8. Procédé suivant l'une des revendications précédentes,
   **caractérisé en ce que**
   l'on forme la deuxième grandeur (K2) auxiliaire de contrôle dans une branche (200) en dents de scie, qui influe sur la grandeur (K) de contrôle, en ce sens que la courbe en fonction du temps des valeurs de différence entre les valeurs (Uk) réelles de tension et les valeurs (Uks) de consigne de tension est en forme de dents de scie.

9. Procédé suivant l'une des revendications précédentes,

**caractérisé en ce que**
l'on forme la première et la deuxième grandeur (K1, K2) auxiliaires de contrôle au moins également en tirant parti de la grandeur (Sfg) de flanc de tension.

**10.** Procédé suivant la revendication 9,
**caractérisé en ce que**
l'on forme la première grandeur (K1) auxiliaire de contrôle par formation du quotient du carré de la valeur (Uh) auxiliaire de tension par un multiple, notamment de 12 fois, de la grandeur (Sfg) de flanc de tension.

**11.** Procédé suivant l'une des revendications 9 à 10 précédentes,
**caractérisé en ce que**
l'on forme la deuxième grandeur (K2) de contrôle par multiplication d'une première grandeur (K21) intermédiaire et d'une deuxième grandeur (K22) intermédiaire,

- dans lequel on détermine la grandeur (K21) intermédiaire en tirant parti de la grandeur (Sfg) de flanc de tension et de la valeur (Uh) auxiliaire de tension, et
- dans lequel on détermine la deuxième grandeur (K22) intermédiaire en tirant parti de la grandeur (Sfg) de flanc de tension, de la valeur (Uh) auxiliaire de tension et des valeurs de différence entre les valeurs (Uk) réelles de tension et les valeurs (Uks) de consigne de tension.

**12.** Dispositif de commande pour la commande d'un onduleur (10) modulaire à plusieurs niveaux, qui comporte au moins un module (KM1-KM6) de convertisseur ayant des sous-modules (SM) montés électriquement en série,

dans lequel chaque sous-module (SM) comprend respectivement au moins deux interrupteurs (S) et un accumulateur d'énergie, et
dans lequel le dispositif de commande est constitué, de manière

- à ce qu'il détermine la tension aux bornes d'au moins un module (KM1-KM6) de convertisseur avec formation de valeurs (Uk) réelles de tension,
- à ce qu'il compare des valeurs (Uk) réelles de tension aux valeurs (Uks) de consigne de tension, et
- en ce qu'il commute au moins l'un des interrupteurs (S) des sous-modules (SM), si les valeurs (Uk) réelles de tension s'écartent des valeurs (Uks) de consigne de tension, dans une mesure définie, au-delà d'une bande d'hystérésis donnée à l'avance, qui est fixée par un seuil (+Hmax) supérieur de bande d'hystérésis et par un seuil (-Hmax) inférieur de bande d'hystérésis,
- dans lequel on modifie, régulièrement ou irrégulièrement, par une grandeur (K) de contrôle, le seuil (+Hmax) supérieur de bande d'hystérésis, le seuil (-Hmax) inférieur de bande d'hystérésis ou les deux seuils de bande d'hystérésis, pour obtenir un comportement de l'onduleur donné à l'avance,
- dans lequel la grandeur (K) de contrôle définit directement le seuil (+Hmax) supérieur de bande d'hystérésis et le seuil (-Hmax) inférieur de bande d'hystérésis correspond à la grandeur (K) de contrôle avec inversion du signe,

**caractérisé en ce que**

- le dispositif de commande est constitué de manière à ce qu'il mesure les tensions de sous-module s'appliquant aux sous-modules (SM) avec formation de valeurs (Usm) de mesure de tension de sous-module,
- de manière à ce qu'il détermine une valeur (Uh) auxiliaire de tension avec incorporation d'une addition des valeurs (Usm) de mesure de tension de sous-module de tous les sous-modules (SM) du module (KM1-KM6) de convertisseur, indépendamment du point de savoir si ceux-ci sont en circuit ou hors circuit,
- de manière à ce qu'il forme, par la formation de la valeur de la valeur absolue de la dérivée mathématique des valeurs de différence entre les valeurs (Uk) réelles de tension et les valeurs (Uks) de consigne de tension en fonction du temps, une grandeur (Sfg) de flanc de tension, et
- de manière à ce qu'il forme la grandeur (K) de contrôle par formation du quotient du carré de la valeur (Uh) auxiliaire de la tension par un multiple, notamment de 12 fois, la grandeur (Sfg) de flanc de tension,
- grâce à quoi la fréquence de commutation, pour la commutation des sous-modules, peut être réduite.

**13.** Onduleur (10) à plusieurs niveaux,
**caractérisé en ce qu'**
il est équipé d'un dispositif de commande suivant la revendication 12.

FIG 1

FIG 2

FIG 3

# FIG 4

## FIG 5

## FIG 6

FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017036712 A1

**In der Beschreibung aufgeführte Nicht-Patentliteratur**

- **SASCHA KUBERA ; RODRIGO ALVAREZ ; JÖRG DORN.** Control of Switching Frequency for Modular Multilevel Converters by a Variable Hysteresis Band Modulation. *18th European Conference on Power Electronics and Applications EPE'16 ECCE Europe*

- **JUN MEI ET.** Quasi-Fixed-Frequency Hysteresis Current Tracking Control Strategy for Modular Multilevel Converters. *JOURNAL OF POWER ELECTRONICS,* 20. November 2014, vol. 14 (6), 1147-1156